# EUROPEAN PATENT SPECIFICATION

(11) **EP 2 795 091 B1**
(45) Date of publication and mention of the grant of the patent: **16.12.2015**
(21) Application number: 11815860.9
(22) Date of filing: 22.12.2011
(51) Int. Cl.: F02M 37/00, F02D 33/00

(54) **FUEL SUPPLY SYSTEM, METHOD FOR CONTROLLING A FUEL SUPPLY SYSTEM ON AN AUTOMOTIVE VEHICLE, AND AUTOMOTIVE VEHICLE ADAPTED TO SUCH A METHOD**
KRAFTSTOFFVERSORGUNGSSYSTEM, VERFAHREN ZUR STEUERUNG EINES KRAFTSTOFFVERSORGUNGSSYSTEMS IN EINEM KRAFTFAHRZEUG UND AN EIN DERARTIGES VERFAHREN ADAPTIERTES KRAFTFAHRZEUG
SYSTÈME D'ALIMENTATION EN CARBURANT, PROCÉDÉ DE COMMANDE D'UN SYSTÈME D'ALIMENTATION EN CARBURANT D'UN VÉHICULE AUTOMOBILE ET VÉHICULE AUTOMOBILE CONÇU POUR CE PROCÉDÉ

(43) Date of publication of application: 29.10.2014
(73) Proprietor: Renault Trucks, 69800 Saint Priest (FR)
(72) Inventor: AUBRET, Emmanuel, F-69200 Venissieux (FR)
(74) Representative: Faucheux, Jérôme
(86) International application number: PCT/IB2011/003269
(87) International publication number: WO 2013/093544

(56) References cited:
- EP-A1- 1 541 858
- WO-A1-2010/068149
- FR-A1- 2 713 563
- JP-A- 6 055 944
- JP-A- 2007 146 806
- US-A- 5 287 841
- US-A1- 2003 056 824
- US-B1- 6 371 151
- US-B2- 7 168 415

## Description

### TECHNICAL FIELD OF THE INVENTION

The invention concerns a fuel supply system and a method for controlling such a fuel supply system on an automotive vehicle, such as a truck. The invention also concerns an automotive vehicle, such as a truck, adapted to such a method.

### BACKGROUND OF THE INVENTION

Today, trucks are often equipped with two fuel tanks, which can be named primary and secondary tanks, the primary tank being usually larger than the secondary tank. Such a structure induces some issues, in particular in case the fuel level is different in the two tanks. In such a case, the internal combustion engine of the truck may stop in case the tank which feeds the engine is empty, while the other tank still contains enough fuel to run the engine.

To solve this issue, standard fuel supply systems use a master tank and a slave tank, fuel of the slave tank being continuously fed to the master tank, while the fuel return from the engine is continuously returned to the master tank. Intake fuel is permanently drawn from the master tank. The fuel level in the master tank is detected so as to activate a warning in case of low fuel level.

With standard fuel supply systems, the volume of non-useable fuel that stays in the tanks when they are almost empty may be relatively high even if the low fuel level warning on the dashboard in on.

To solve these technical issues, it is known, for example, from US-B-7 168 415, to detect the fuel level in both primary and secondary tanks and to selectively connect both an intake fuel line and a return fuel line of the fuel supply system to one of the tanks, depending on their fuel levels.

This technique, which uses a three-way valve on the intake fuel line, provokes energy losses. In addition, the return fuel is always directed to the tank from which fuel is drawn, causing a non-optimized management of the fuel levels in the two tanks.

### SUMMARY

The aim of the invention is to provide a new method for controlling a fuel supply system on an automotive vehicle, which allows to manage the fuel levels on two tanks in a more efficient way than in the prior art and by using a simple control method.

To this end, the invention concerns a method for controlling a fuel supply system on an automotive vehicle, such as a truck, said fuel supply system comprising a primary fuel tank and a secondary fuel tank, an intake fuel line for feeding an internal combustion engine of the vehicle, and a fuel return line selectively connected to either the primary or the secondary fuel tank.

The method comprises the step of determining the respective fuel levels in both primary and secondary fuel tanks. This method is characterized in that it further comprises the steps of :
- a) permanently connecting the intake fuel line with at least the primary fuel tank,
- b) selectively connecting the fuel return line to either the primary or the secondary fuel tank on the basis of at least the fuel level of the secondary fuel tank.

Thanks to the invention, the internal combustion engine is permanently fed with at least the primary fuel tank, avoiding the use of a valve to select the feeding fuel tank and the subsequent energy losses of such a control method. Moreover, fuel tanks can be more efficiently emptied by selectively connecting each of them to the fuel return line on the basis of at least the fuel level of the secondary fuel tank, providing a better reliability of the low level warning of the vehicle.

According to further aspects of the invention which are advantageous but not compulsory, such a method may incorporate one or several of the following features:
- According to the step a) of the method, the intake fuel line may also be connected to the secondary fuel tank.
- According to the step b) of the method, the selective connection of the fuel return line to either the primary or the secondary fuel tank may be performed on the basis of the fuel level in the primary fuel tank and in the secondary tank.
- In a first variant of the method according to the invention, if the fuel level in the primary fuel tank is superior to the fuel level in the secondary fuel tank, the return line may be connected to the secondary fuel tank and, if the fuel tank level in the primary fuel tank is inferior to the fuel level in the secondary tank, the return line may be connected to the primary tank. With such strategy, the fuel levels in the fuel tanks can be maintained substantially equal.
- In such a case, if the fuel levels in the primary and secondary fuel tanks are equal, the return line may be connected to the primary fuel tank.
- In such variant, the method may comprise a step consisting in activating a low fuel level warning when the fuel levels in the primary and secondary fuel tanks reach low threshold fuel levels.
- In a second variant of the method according to the invention, the method may comprise the step of connecting the fuel return line to the primary tank if the fuel level in the secondary tank becomes inferior to a low threshold fuel level.
- In such a case, the method may also comprise a step of connecting the secondary fuel tank to the primary fuel tank so that fuel can pass from the secondary fuel tank to the primary fuel tank, and a step of connecting the intake fuel line with only the primary fuel tank. Thanks to this variant of the invention, the secondary fuel tank can be more efficiently emptied by selectively connecting it to the fuel return line on the basis of its fuel level.
- In this second variant, the method may comprise a step consisting in, before the fuel level in the secondary tank becomes inferior to a low threshold fuel level, connecting by default the fuel return line to the secondary fuel tank.
- It may also comprise a step consisting in activating a low fuel level warning when the secondary tank is empty and when the primary tank reaches a low threshold fuel level.
- In all cases, the fuel return line may be selectively connected to either the primary or the secondary fuel tank via a valve system which is controlled in order to connect the return fuel line either to the primary fuel tank or to the secondary fuel tank.
- The valve system may for example comprise a three-way valve.

Besides, a subject matter of the present invention is a fuel supply system for an automotive vehicle, said fuel supply system comprising a primary fuel tank, a secondary fuel tank, an intake fuel line for feeding an internal combustion engine of the vehicle, a fuel return line connected to either the primary or the secondary fuel tank via a valve system, and fuel level detectors arranged to detect the respective fuel levels in both primary and secondary fuel tanks. This fuel supply system is characterized in that:
- a) the intake fuel line is permanently connected with at least the primary fuel tank,
- b) the valve system is controlled on the basis of at least the fuel level in the secondary fuel tank in order to connect the fuel return line to either the first fuel tank or to the second fuel tank.

According to further aspects of the invention which are advantageous but not compulsory, such a fuel supply system may incorporate one or several of the following features :
- The intake line may also be connected to the secondary fuel tank.
- The secondary fuel tank may be connected to the primary fuel tank so that fuel can pass from the secondary fuel tank to the primary fuel tank. Here, the intake fuel line may be connected with only the primary fuel tank.
- It can be provided that only the secondary fuel tank is equipped with an air intake.
- In all cases, the valve system may comprise a three-way valve.
- The control of the valve system may also performed on the basis of the fuel level of the primary fuel tank in such a way that when the fuel level in the primary tank is superior to the fuel level in the secondary fuel tank, the return line is connected to the secondary fuel tank, and when the fuel tank level in the primary tank is inferior to the fuel level in the secondary fuel tank, the return line is connected to the primary tank.
- The fuel return line may be connected to the secondary fuel tank as long as the fuel level in the secondary tank is superior to a low threshold fuel level.
- The valve system may be controlled in such a way that the fuel return line is connected to the primary fuel tank if the fuel level in the secondary fuel tank becomes inferior to the low threshold fuel level.
- The invention also concerns an automotive vehicle, such as a truck, equipped with an internal combustion engine and a fuel supply system having the above mentioned features, and/or controlled according to the above-mentioned method.

### BRIEF DESCRIPTION OF THE DRAWINGS

The invention will now be explained in correspondence with the annexed figures, as an illustrative example. In the annexed figures:
- Figure 1 is a schematic view of a first embodiment of a fuel supply system of a truck according to the invention, with which the method of the invention can be implemented.
- Figure 2 is a schematic view similar to figure 1, illustrating a second embodiment of a fuel supply system of a truck according to the invention.

### DETAILED DESCRIPTION OF SOME EMBODIMENTS

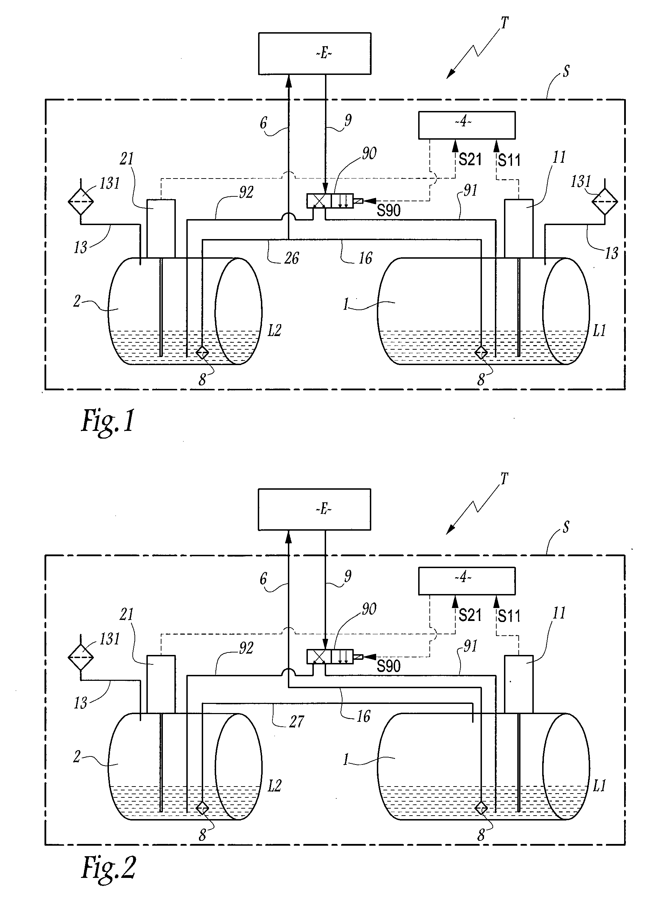

The fuel supply system S represented on figures 1 and 2 includes at least two tanks which can be referred to a primary fuel tank 1 and a secondary fuel tank 2. Primary fuel tank 1 has for example a volume superior to the volume of secondary fuel tank 2.

The fuel levels in primary tank 1 and secondary tank 2 are respectively referenced L1 and L2 and may be determined by the system. For example, each of primary tank 1 and secondary tank 2 can be equipped with a respective fuel level detector 11 and 21, which senses the fuel level and sends a corresponding electrical signal S11 or S21 to an electronic control unit 4. Fuel level determination can be achieved by other ways, such as by a calculation based on an initial volume and based on an estimated amount of fuel entry and exit in and out of the tank.

Fuel supply system S is installed in an automotive vehicle, such as a truck T, equipped with an internal combustion engine E which is fed with fuel coming from both primary tank 1 and secondary tank 2. To this end, fuel supply system S includes an intake fuel line 6.

In a first exemplary embodiment of a fuel system according to the invention, as shown on figure 1, primary tank 1 is connected to intake fuel line 6 by a primary intake line 16 while secondary tank 2 is connected to intake fuel line 6 by a secondary intake line 26. Fuel is drawn from primary intake line 16 and secondary intake line 26 for example via respective suction filters 8. In this first embodiment, the two tanks are non-connected in the sense that no fuel may be transferred from one to the other.

Fuel supply system S further comprises a fuel return line 9, which returns the fuel which has not been burnt inside internal combustion engine E. According to the invention, the fuel return line can be selectively connected to either the primary or the secondary fuel tank on the basis of at least the fuel level of the secondary fuel tank. In the shown examples, return line 9 comprises a valve system 90 which can be embodied as a three-way valve. In a first position, the three-way valve 90 connects fuel return line 9 to secondary fuel tank 2 via a secondary return line 92. In a second position of three-way valve 90, fuel return line 9 is connected to primary tank 1 via a primary return line 91. The first position of three-way valve 90 is represented on figure 1. Three-way valve 90 is controlled thanks to an electrical signal S90 sent by electronic control unit 4 so as to selectively connect fuel return line 9 to primary tank 1 or to secondary tank 2.

In the example of Figure 1, each of primary fuel tank 1 and secondary fuel tank 2 is equipped with an air intake 13, which includes an air filter 131, to allow pressure balancing so that air pressure in the tank is maintained approximately at atmospheric pressure. Nevertheless, the system could be equipped with only one air intake. Pressure balancing can be achieved through a mere air conduit connecting for example the top portions of the two fuel tanks.

The method of the invention involves:
- a) permanently connecting the intake fuel line 6 with at least the primary fuel tank 1,
- b) selectively connecting the fuel return line to either the primary 1 or the secondary 2 fuel tank on the basis of at least the fuel level L2 in the secondary fuel tank 2.

In this first embodiment, the fuel intake 6 line is in fact connected permanently to both fuel tanks so that the internal combustion engine E is fed by pumping fuel from both primary tank 1 and secondary tank 2, while the fuel levels L1 and L2 are detected continuously or at regular intervals.

In a first variant of the method, the levels L1 and L2 may be compared to each other by electronic control unit 4 in a manner known from the prior art. If the fuel level L1 in primary tank 1 becomes substantially superior to the fuel level L2 in secondary tank 2, the valve system 90 is controlled by electronic control unit 4 so as to connect return line 9 to secondary fuel tank 2. In other words, the return fuel is returned into the tank whose fuel level is the lowest, so that the fuel levels L1 and L2 can be maintained substantially equal.

In the inverted case, if fuel level L1 in primary tank 1 becomes substantially inferior to fuel level L2 in secondary tank 2, the valve system 90 is controlled so that fuel return line 9 is connected to primary tank 1. Here again, the return fuel is returned into the tank whose level is the lowest.

In case fuel levels L1 and L2 are substantially equal, the valve system 90 can be controlled so that fuel return line 9 is connected to primary tank 1.

This variant of a method according to the invention permits to efficiently avoid excessive fuel level differences between primary tank 1 and secondary tank 2.

In case fuel detectors 11 and 21 detect that both primary and secondary fuel tanks 1 and 2 reach a low threshold fuel level, a low fuel level warning can be activated on the dashboard of truck T.

A second exemplary embodiment of a fuel system according to the invention is represented on figure 2. Elements similar to the first embodiment have the same references and work in the same way. Only the differences with respect to the first embodiment are detailed hereafter.

In this embodiment, only primary tank 1 is connected to intake fuel line 6 via primary intake line 16, which is an extension of the intake fuel line 6. Secondary tank 2 is not directly connected to intake fuel line 6 but is connected to primary tank 1 by a fuel transfer line 27.

Preferably, the fuel transfer line is a fuel suction line having a first end located in a bottom portion of the secondary tank, preferably at or near its lowest point, and having a second end in an upper area of primary tank 1, preferably at or near its most upper point. It can be noted that such fuel transfer line does not allow fuel from getting from primary tank 1 to secondary tank 2. The use of such suction line implies that the primary tank is not connected to the atmosphere; therefore primary tank 1 is not equipped with any air intake 13. More precisely, the air intake of primary tank 1 is in fact the air intake 13 of secondary tank 2, but, in theory, no air is allowed through the fuel transfer line as long as there is fuel in the secondary tank which can be sucked through the first end of the fuel transfer line 27.

In this embodiment, when fuel is drawn from primary tank 1, the level of fuel in tank 1 decreases, thereby lowering the pressure in the primary tank, and a pressure difference is created between primary tank 1 and secondary tank 2 which causes a suction effect to draw the fuel from secondary tank 2 to primary tank 1 via the fuel transfer line 27. Therefore, in this embodiment of the fuel system, the two tanks are indirectly connected, in the sense that fuel may be transferred from the secondary tank to the primary tank, but said connection is not direct, as in the case of two tanks which would be connected by a fuel line joining a bottom portion of each tank, thereby always maintaining the same level of fuel in both tanks. In this second embodiment the connection is indirect because there is no physical continuity between the volumes of fuel contained in each tank.

In normal conditions, in other words, when neither primary tank 1 nor secondary tank 2 is about to run empty, fuel return line 9 may be by default connected to secondary tank 2. Nevertheless, as an alternate way of controlling the system, the method of fuel level balancing as described above could be used in some embodiments in order to limit the fuel level difference between the two tanks, by selecting which of the primary or secondary fuel tank is to be connected to the fuel return line.

In both cases, according to a second variant of the method according to the invention, if fuel level L2 in secondary tank 2 becomes inferior to a threshold level, valve system 90 is controlled by electronic control unit 4 so that fuel return line 9 is connected to primary tank 1 and not to secondary tank 2 until secondary fuel tank is emptied. This makes sure that secondary tank 2 actually empties thanks to the automatic transfer of fuel from secondary tank 2 to primary tank 1 via fuel transfer line 27.

If the operation of truck T goes on until fuel level L1 in primary tank becomes inferior to a threshold level, the level detection signal S11 permits to activate a low level warning in the dashboard of truck T in a very reliable way, because such a warning is activated when secondary tank 2 is empty and when primary tank 1 is at a low fuel level. This avoids unnecessary activation of the low level warning. This avoids too frequent refueling operations and prevents too large amounts of fuel from staying unused in the fuel tanks 1 and 2 of truck T.

It can be noted that this second variant of the method according to invention, which consists in connecting the fuel return line 9 to the primary tank 1 if the fuel level L2 in the secondary fuel tank 2 becomes inferior to a low threshold fuel level, can also advantageously be implemented with a fuel system as described in Figure 1, to further minimize the quantity of fuel which may remain in the secondary tank. For example, the two variants of the method as described above could be implemented successively for controlling the fuel system of Figure 1, with the second variant being implemented to empty the secondary tank 2 after the first variant has been implemented to bring both tanks to a low fuel level.

It should be understood that the exemplary embodiments described are illustrative, and not limiting, and that variations of the configuration shown and described are within the scope of the present invention as defined by the claims.

For example, the valve system 90 could comprise two separate valves, one being located in the primary return line 91 and the other being located in the secondary return line 92, for blocking or allowing return of fuel through each return line 91, 92. In this variation, primary and secondary return lines 91, 92 could be connected to the fuel return line 9 for example by a T-junction.

## Claims

1. Method for controlling a fuel supply system (S) on an automotive vehicle such as a truck (T), said fuel supply system comprising:
- a primary fuel tank (1) and a secondary fuel tank (2),
- an intake fuel line (6) for feeding an internal combustion engine (E) of the vehicle, and
- a fuel return line (9) selectively connected to either the primary (1) or the secondary (2) fuel tank,
- said method comprising the step of determining the respective fuel levels (L1 , L2) in both primary (1) and secondary (2) fuel tanks,
wherein said method comprises steps of :
- a) permanently connecting the intake fuel line (6) with at least the primary fuel tank (1), and
- b) selectively connecting the fuel return line to either the primary (1) or the secondary (2) fuel tank on the basis of at least the fuel level (L2) in the secondary fuel tank (2),
**characterized in that** said method further comprises the step of:
- c) connecting the fuel return line (9) to the primary tank (1) if the fuel level (L2) in the secondary fuel tank (2) becomes inferior to a low threshold fuel level.

2. Method according to claim 1 , wherein during step a) intake fuel line (6) is also connected to the secondary fuel tank (2).

3. Method according to claim 2, wherein during step b) the selective connection of the fuel return line to either the primary (1) or the secondary (2) fuel tank is also performed on the basis of the fuel level (L1) of the primary fuel tank (1).

4. Method according to claim 3, wherein, if the fuel level (L1) in the primary fuel tank (1) is superior to the fuel level (L2) in the secondary tank (2), the return line (9) is connected to the secondary fuel tank (2) and, if the fuel tank level (L1) in the primary fuel tank (1) is inferior to the fuel level (L2) in the secondary fuel tank (2), the return line (9) is connected to the primary fuel tank (1).

5. Method according to claim 4, wherein if the fuel levels (L1, L2) in the primary (1) and secondary (2) fuel tanks are equal, the return line (9) is connected to the primary fuel tank (1).

6. Method according to one of the previous claims, wherein it comprises a step consisting in activating a low fuel level warning when the fuel levels (L1, L2) in the primary (1) and secondary (2) fuel tanks reach low threshold fuel levels.

7. Method according to claim 1, wherein it comprises the steps of connecting the intake fuel line (6) with only the primary fuel tank (1) and of connecting the secondary fuel tank (2) to the primary fuel tank (1) so that fuel can pass from the secondary fuel tank (2) to the primary fuel tank (1).

8. Method according to claim 7, wherein it comprises a step of, before the fuel level (L2) in the secondary tank (2) becomes inferior to a low threshold fuel level, connecting by default the fuel return line (9) to the secondary fuel tank (2).

9. Method according to one of claims 7 or 8, wherein it comprises a step consisting in activating a low fuel level warning when the secondary tank (2) is empty and when the primary tank (1) reaches a low threshold fuel level.

10. Method according to any one of the previous claims, wherein the fuel return line (9) is selectively connected to either the primary (1) or the secondary (2) fuel tank via a valve system (90) which is controlled in order to connect the return fuel line (9) either to the primary fuel tank (1) or to the secondary fuel tank (2).

11. Method according to the claim 10 , wherein the valve system (90) comprises a three-way valve.

12. A fuel supply system (S) on an automotive vehicle such as a truck (T), said fuel supply system comprising :
- at least a primary fuel tank (1) and a secondary fuel tank (2),
- an intake fuel line (6) with suction filters (8), for feeding an internal combustion engine (E) of the vehicle, and
- a fuel return line (9) connected to either the primary (1) or the secondary (2) fuel
- fuel level detectors (11, 21) arranged to detect (S11, S21) the respective fuel levels (L1, L2) in both primary (1) and secondary (2) fuel tanks,
wherein:
- a) the intake fuel line (6) is permanently connected with at least the primary fuel tank (1), and
- b) the valve system (90) is controlled on the basis of at least the fuel level (L2) in the secondary fuel tank (2) in order to connect the fuel return line (9) to either the primary fuel tank (1) or the secondary fuel tank (2),
**characterized in that**:
- c) the fuel return line (6) is connected to the secondary fuel tank as long as the fuel level in the secondary tank is superior to a low threshold fuel level.

13. A fuel supply system (S) according to claim 12, wherein the intake line (6) is also connected to the secondary fuel tank (2).

14. A fuel supply system (S) according to claim 12, wherein:
- the secondary tank (2) is connected to the primary tank (1) so that fuel can pass from the secondary tank (2) to the primary tank (1),
- the intake fuel line (6) is connected with only the primary fuel tank (1).

15. Automotive vehicle according to claim 14, wherein only the secondary tank (2) is equipped with an air intake (13).

16. A fuel supply system (S) according to one of claims 12 to 15, wherein the valve system (90) comprises a three-way valve.

17. A fuel supply system (S) according to any of claims 12 to 16, wherein the control of the valve system (90) may also performed on the basis of the fuel level (L1) in the primary fuel tank (1) in such a way that when the fuel level (L1) in the primary tank (1) is superior to the fuel level (L2) in the secondary fuel tank (2), the return line (9) is connected to the secondary fuel tank (2), and when the fuel level (L1) in the primary tank (1) is inferior to the fuel level (L2) in the secondary fuel tank (2), the return line (9) is connected to the primary tank (1).

18. A fuel supply system (S) according to any of claims 12 to 17, wherein the valve system (90) is controlled in such a way that the fuel return line (9) is connected to the primary tank (1) if the fuel level (L2) in the secondary tank (2) becomes inferior to the low threshold fuel level.

19. Automotive vehicle, such as a truck (T), equipped with an internal combustion engine (E) and a fuel supply system (S) controlled by a method according to any one of claims 1 to 11.

20. Automotive vehicle, such as a truck (T), equipped with an internal combustion engine (E) and a fuel supply system (S) according to any one of claims 12 to 18.

## Patentansprüche

1. Verfahren zur Steuerung eines Kraftstoffzuführsystems (S) an einem Kraftfahrzeug, wie zum Beispiel einem Lastwagen (T), wobei das Kraftstoffzuführsystem umfasst:
- einen primären Kraftstofftank (1) und einen sekundären Kraftstofftank (2),
- eine Einlasskraftstoffleitung (6) zur Speisung eines Verbrennungsmotors (E) des Fahrzeugs, und
- eine Kraftstoffrückführleitung (9), die wahlweise mit entweder dem primären (1) oder dem sekundären (2) Kraftstofftank verbunden wird,
- wobei das Verfahren den Schritt der Bestimmung der jeweiligen Kraftstoffniveaus (L1, L2) sowohl in dem primären (1) als auch in dem sekundären (2) Kraftstofftank umfasst,
- wobei das Verfahren die Schritte umfasst:
- a) permanente Verbindung der Einlasskraftstoffleitung (6) mit wenigstens dem primären Kraftstofftank (1), und
- b) wahlweise Verbindung der Kraftstoffrückführleitung mit entweder dem primären (1) oder dem sekundären (2) Kraftstofftank auf der Basis wenigstens des Kraftstoffniveaus (L2) in dem sekundären Kraftstofftank (2),
**dadurch gekennzeichnet, dass** das Verfahren außerdem den Schritt umfasst:
- c) Verbindung der Kraftstoffrückführleitung (9) mit dem primären Tank (1), wenn das Kraftstoffniveau (L2) in dem sekundären Kraftstofftank (2) einen unteren Kraftstoffniveauschwellwert unterschreitet.

2. Verfahren nach Anspruch 1, wobei während des Schritts a) auch die Einlasskraftstoffleitung (6) mit dem sekundären Kraftstofftank (2) verbunden wird.

3. Verfahren nach Anspruch 2, wobei während des Schritts b) die wahlweise Verbindung der Kraftstoffrückführleitung mit entweder dem primären (1) oder dem sekundären (2) Kraftstofftank auch auf der Basis des Kraftstoffniveaus (L1) des primären Kraftstofftanks (1) durchgeführt wird.

4. Verfahren nach Anspruch 3, wobei, wenn das Kraftstoffniveau (L1) in dem primären Kraftstofftank (1) oberhalb des Kraftstoffniveaus (L2) in dem sekundären Tank (2) liegt, die Rückführleitung (9) mit dem sekundären Kraftstofftank (2) verbunden wird, und, wenn das Kraftstofftankniveau (L1) in dem primären Kraftstofftank (1) unterhalb des Kraftstoffniveaus (L2) in dem sekundären Kraftstofftank (2) liegt, die Rückführleitung (9) mit dem primären Kraftstofftank (1) verbunden wird.

5. Verfahren nach Anspruch 4, wobei, wenn die Kraftstoffniveaus (L1, L2) in dem primären (1) und dem sekundären (2) Kraftstofftank gleich sind, die Rückführleitung (9) mit dem primären Kraftstofftank (1) verbunden wird.

6. Verfahren nach einem der vorhergehenden Ansprüche, wobei es einen Schritt umfasst, der in der Aktivierung einer Warnung für ein unteres Kraftstoffniveau besteht, wenn die Kraftstoffniveaus (L1, L2) in dem primären (1) und dem sekundären (2) Kraftstofftank untere Kraftstoffniveauschwellwerte erreichen.

7. Verfahren nach Anspruch 1, wobei es die Schritte der Verbindung der Einlasskraftstoffleitung (6) mit nur dem primären Kraftstofftank (1) und der Verbindung des sekundären Kraftstofftanks (2) mit dem primären Kraftstofftank (1) umfasst, so dass Kraftstoff von dem sekundären Kraftstofftank (2) zu dem primären Kraftstofftank (1) strömen kann.

8. Verfahren nach Anspruch 7, wobei es einen Schritt umfasst, bei dem, bevor das Kraftstoffniveau (L2) in dem sekundären Tank (2) den unteren Kraftstoffniveauschwellwert unterschreitet, die Kraftstoffrückführleitung (9) standardgemäß mit dem sekundären Kraftstofftank (2) verbunden wird.

9. Verfahren nach einem der Ansprüche 7 oder 8, wobei es einen Schritt umfasst, der in der Aktivierung einer Warnung für ein unteres Kraftstoffniveau besteht, wenn der sekundäre Tank (2) leer ist und wenn der primäre Tank (1) einen unteren Kraftstoffniveauschwellwert erreicht.

10. Verfahren nach irgendeinem der vorhergehenden Ansprüche, wobei die Kraftstoffrückführleitung (9) wahlweise mit oder dem primären (1) und dem sekundären (2) Kraftstofftank über ein Ventilsystem (90) verbunden wird, das gesteuert wird, um die Rückführkraftstoffleitung (9) entweder mit dem primären Kraftstofftank (1) oder dem sekundären Kraftstofftank (2) zu verbinden.

11. Verfahren nach Anspruch 10, wobei das Ventilsystem (90) ein Dreiwegeventil umfasst.

12. Kraftstoffzuführsystem (S) an einem Kraftfahrzeug, wie zum Beispiel einem Lastwagen (T), wobei das Kraftstoffzuführsystem umfasst:
- wenigstens einen primären Kraftstofftank (1) und einen sekundären Kraftstofftank (2),
- eine Einlasskraftstoffleitung (6) mit Saugfiltern (8) zur Speisung eines Verbrennungsmotors (E) des Kraftfahrzeugs, und
- eine Kraftstoffrückführleitung (9), die entweder mit dem primären (1) oder dem sekundären (2) Kraftstofftank verbunden wird,
- Kraftstoffniveauerfassungseinrichtungen (11, 21), die zur Erfassung (S11, S21) des jeweiligen Kraftstoffniveaus (L1, L2) sowohl in dem primären (1) als auch in dem sekundären (2) Kraftstofftank angeordnet sind,
wobei
- a) die Einlasskraftstoffleitung (6) permanent mit wenigstens dem primären Kraftstofftank (1) verbunden ist, und
- b) das Ventilsystem (90) auf der Basis wenigstens des Kraftstoffniveaus (L2) in dem sekundären Kraftstofftank (2) gesteuert wird, um die Kraftstoffrückführleitung (9) entweder mit dem primären Kraftstofftank (1) oder dem sekundären Kraftstofftank (2) zu verbinden,
**dadurch gekennzeichnet, dass**
- c) die Kraftstoffrückführleitung (6) mit dem sekundären Kraftstofftank verbunden ist, solange das Kraftstoffniveau in dem sekundären Tank oberhalb eines unteren Kraftstoffniveauschwellwerts liegt.

13. Kraftstoffzuführsystem (S) nach Anspruch 12, wobei die Einlassleitung (6) außerdem mit dem sekundären Kraftstofftank (2) verbunden ist.

14. Kraftstoffzuführsystem (S) nach Anspruch 12, wobei
- der sekundäre Tank (2) mit dem primären Tank (1) so verbunden ist, dass Kraftstoff von dem sekundären Tank (2) zu dem primären Tank (1) strömen kann,
- die Einlasskraftstoffleitung (6) nur mit dem primären Kraftstofftank (1) verbunden ist.

15. Kraftfahrzeug nach Anspruch 14, wobei nur der sekundäre Tank (2) mit einem Lufteinlass (13) ausgestattet ist.

16. Kraftstoffzuführsystem (S) nach einem der Ansprüche 12 bis 15, wobei das Ventilsystem (90) ein Dreiwegeventil umfasst.

17. Kraftstoffzuführsystem (S) nach irgendeinem der Ansprüche 12 bis 16, wobei die Steuerung des Ventilsystems (90) auch auf der Basis des Kraftstoffniveaus (L1) in dem primären Kraftstofftank (1) so durchgeführt werden kann, dass, wenn das Kraftstoffniveau (L1) in dem primären Tank (1) oberhalb des Kraftstoffniveaus (L2) in dem sekundären Tank (2) liegt, die Rückführleitung (9) mit dem sekundären Kraftstofftank (2) verbunden wird, und wenn das Kraftstoffniveau (L1) in dem primären Tank (1) unterhalb des Kraftstoffniveaus (L2) in dem sekundären Kraftstofftank (2) liegt, die Rückführleitung (9) mit dem primären Tank (1) verbunden wird.

18. Kraftstoffzuführsystem (S) nach irgendeinem der Ansprüche 12 bis 17, wobei das Ventilsystem (90) so gesteuert wird, dass die Kraftstoffrückführleitung (9) mit dem primären Tank (1) verbunden wird, wenn das Kraftstoffniveau (L2) in dem sekundären Tank (2) den unteren Kraftstoffniveauschwellwert unterschreitet.

19. Kraftfahrzeug, wie zum Beispiel, ein Lastwagen (T), ausgestattet mit einem Verbrennungsmotor (E) und einem Kraftstoffzuführsystem (S), das durch ein Verfahren nach einem der Ansprüche 1 bis 11 gesteuert wird.

20. Kraftfahrzeug, wie zum Beispiel, ein Lastwagen (T), ausgestattet mit einem Verbrennungsmotor (E) und einem Kraftstoffzuführsystem (S) nach irgendeinem der Ansprüche 12 bis 18.

## Revendications

1. Procédé de commande d'un système (S) d'alimentation en carburant sur un véhicule automobile tel qu'un camion (T), ledit système d'alimentation en carburant comprenant :
- un réservoir de carburant primaire (1) et un réservoir de carburant secondaire (2),
- une canalisation de carburant d'admission (6) pour alimenter le moteur à combustion interne (E) du véhicule, et
- une canalisation de retour de carburant (9) raccordée sélectivement soit au réservoir de carburant primaire (1) soit au secondaire (2),
- ledit procédé comprenant l'étape consistant à déterminer les niveaux de carburant (L1, L2) respectifs dans les deux réservoirs de carburant primaire (1) et secondaire (2),
dans lequel ledit procédé comprend les étapes consistant à :
- a) raccorder en permanence la canalisation de carburant d'admission (6) avec au moins le réservoir de carburant primaire (1), et
- b) raccorder sélectivement la canalisation de retour de carburant soit au réservoir de carburant primaire (1) soit au secondaire (2) sur la base d'au moins le niveau de carburant (L2) dans le réservoir de carburant secondaire (2),
**caractérisé en ce que** ledit procédé comprend en outre l'étape consistant à :
- c) raccorder la canalisation de retour de carburant (9) au réservoir primaire (1) si le niveau de carburant (L2) dans le réservoir de carburant secondaire (2) tombe en dessous d'un seuil bas de niveau de carburant.

2. Procédé selon la revendication 1, dans lequel pendant l'étape a) la canalisation de carburant d'admission (6) est aussi raccordée au réservoir de carburant secondaire (2).

3. Procédé selon la revendication 2, dans lequel pendant l'étape b) le raccordement sélectif de la canalisation de retour de carburant soit au réservoir de carburant primaire (1) soit au secondaire (2) se fait aussi sur la base du niveau de carburant (L1) dans le réservoir de carburant primaire (1).

4. Procédé selon la revendication 3, dans lequel, si le niveau de carburant (L1) dans le réservoir de carburant primaire (1) est supérieur au niveau de carburant (L2) dans le réservoir secondaire (2), la canalisation de retour (9) est raccordée au réservoir de carburant secondaire (2) et, si le niveau de carburant (L1) dans le réservoir de carburant primaire (1) est inférieur au niveau de carburant (L2) dans le réservoir de carburant secondaire (2), la canalisation de retour (9) est raccordée au réservoir de carburant primaire (1).

5. Procédé selon la revendication 4, dans lequel, si les niveaux de carburant (L1, L2) dans les réservoirs de carburant primaire (1) et secondaire (2) sont égaux, la canalisation de retour (9) est raccordée au réservoir de carburant primaire (1).

6. Procédé selon l'une quelconque des revendications précédentes, qui comprend une étape consistant à activer un avertisseur de faible niveau de carburant quand les niveaux de carburant (L1, L2) dans les réservoirs de carburant primaire (1) et secondaire (2) atteignent des seuils bas de niveau de carburant.

7. Procédé selon la revendication 1, qui comprend les étapes consistant à raccorder la canalisation de carburant d'admission (6) seulement au réservoir de carburant primaire (1) et à raccorder le réservoir de carburant secondaire (2) au réservoir de carburant primaire (1), de sorte que le carburant peut passer du réservoir de carburant secondaire (2) au réservoir de carburant primaire (1).

8. Procédé selon la revendication 7, qui comprend une étape consistant, avant que le niveau de carburant (L2) dans le réservoir secondaire (2) ne tombe en dessous d'un seuil bas de niveau de carburant, à raccorder par défaut la canalisation de retour de carburant (9) au réservoir de carburant secondaire (2).

9. Procédé selon la revendication 7 ou 8, qui comprend une étape consistant à activer un avertisseur de faible niveau de carburant quand le réservoir secondaire (2) est vide et quand le réservoir primaire (1) atteint un seuil bas de niveau de carburant.

10. Procédé selon l'une quelconque des revendications précédentes, dans lequel la canalisation de retour de carburant (9) est raccordée sélectivement soit au réservoir de carburant primaire (1) soit au secondaire (2) par l'intermédiaire d'un système (90) de soupapes qui est commandé afin de raccorder la canalisation de retour de carburant (9) soit au réservoir de carburant primaire (1) soit au réservoir de carburant secondaire (2).

11. Procédé selon la revendication 10, dans lequel le système (90) de soupapes comprend une vanne à trois voies.

12. Système (S) d'alimentation en carburant sur un véhicule automobile tel qu'un camion (T), ledit système d'alimentation en carburant comprenant :
- au moins un réservoir de carburant primaire (1) et un réservoir de carburant secondaire (2),
- une canalisation de carburant d'admission (6), avec des crépines (8) de pompe, pour alimenter le moteur à combustion interne (E) du véhicule, et
- une canalisation de retour de carburant (9) raccordée soit au réservoir de carburant primaire (1) soit au secondaire (2),
- des détecteurs (11, 21) de niveau de carburant agencés pour détecter (S11, S21) les niveaux de carburant (L1, L2) respectifs dans les deux réservoirs de carburant primaire (1) et secondaire (2),
dans lequel :
- a) la canalisation de carburant d'admission (6) est raccordée en permanence avec au moins le réservoir de carburant primaire (1), et
- b) le système (90) de soupapes est commandé sur la base d'au moins le niveau de carburant (L2) dans le réservoir de carburant secondaire (2) afin de raccorder la canalisation de retour de carburant (9) soit au réservoir de carburant primaire (1) soit au réservoir de carburant secondaire (2),
**caractérisé en ce que** :
- c) la canalisation de retour de carburant (6) est raccordée au réservoir de carburant secondaire tant que le niveau de carburant dans le réservoir secondaire est supérieur à un seuil bas de niveau de carburant.

13. Système (S) d'alimentation en carburant selon la revendication 12, dans lequel la canalisation d'admission (6) est aussi raccordée au réservoir de carburant secondaire (2).

14. Système (S) d'alimentation en carburant selon la revendication 12, dans lequel :
- le réservoir secondaire (2) est relié au réservoir primaire (1) afin que le carburant puisse passer du réservoir secondaire (2) au réservoir primaire (1),
- la canalisation de carburant d'admission (6) n'est raccordée qu'avec le réservoir de carburant primaire (1).

15. Véhicule automobile selon la revendication 14, dans lequel seul le réservoir secondaire (2) est équipé d'une prise d'air (13).

16. Système (S) d'alimentation en carburant selon l'une quelconque des revendications 12 à 15, dans lequel le système (90) de soupapes comprend une vanne à trois voies.

17. Système (S) d'alimentation en carburant selon l'une quelconque des revendications 12 à 16, dans lequel la commande du système (90) de soupapes peut aussi s'effectuer sur la base du niveau de carburant (L1) dans le réservoir de carburant primaire (1) de telle façon que, quand le niveau de carburant (L1) dans le réservoir primaire (1) est supérieur au niveau de carburant (L2) dans le réservoir de carburant secondaire (2), la canalisation de retour (9) est raccordée au réservoir de carburant secondaire (2) et, quand le niveau de carburant (L1) dans le réservoir primaire (1) est inférieur au niveau de carburant (L2) dans le réservoir de carburant secondaire (2), la canalisation de retour (9) est raccordée au réservoir primaire (1).

18. Système (S) d'alimentation en carburant selon l'une quelconque des revendications 12 à 17, dans lequel le système (90) de soupapes est commandé de telle façon que la canalisation de retour de carburant (9) est raccordée au réservoir primaire (1) si le niveau de carburant (L2) dans le réservoir secondaire (2) tombe en dessous du seuil bas de niveau de carburant.

19. Véhicule automobile, tel qu'un camion (T), équipé d'un moteur à combustion interne (E) et d'un système (S) d'alimentation en carburant commandé suivant un procédé selon l'une quelconque des revendications 1 à 11.

20. Véhicule automobile, tel qu'un camion (T), équipé d'un moteur à combustion interne (E) et d'un système (S) d'alimentation en carburant selon l'une quelconque des revendications 12 à 18.
